# EUROPEAN PATENT SPECIFICATION

(11) **EP 3 526 674 B1**
(45) Date of publication and mention of the grant of the patent: **23.06.2021**
(21) Application number: 16784451.3
(22) Date of filing: 14.10.2016
(51) Int. Cl.: G06F 11/36, G06F 9/50

(54) **TIME-PARALLELIZED INTEGRITY TESTING OF SOFTWARE CODE**
ZEITPARALLELISIERTE INTEGRITÄTSPRÜFUNG EINES SOFTWARECODES
TEST D'INTÉGRITÉ PARALLÉLISÉ DANS LE TEMPS D'UN CODE LOGICIEL

(43) Date of publication of application: 21.08.2019
(73) Proprietor: Telefonaktiebolaget LM Ericsson (PUBL), 164 83 Stockholm (SE)
(72) Inventor: BUIL, Manuel, 22300 Barbastro (ES); LAUSUCH SALES, Jose Angel, 03004 Alicante (ES)
(74) Representative: Ericsson
(86) International application number: PCT/EP2016/074740
(87) International publication number: WO 2018/068867

(56) References cited:
- EP-A1- 2 447 838
- WO-A1-2013/078269
- US-A1- 2013 117 611
- US-A1- 2014 026 122

## Description

### Technical Field

The invention generally relates to techniques of integrity tests of a plurality of software code items. The invention specifically relates to techniques of triggering a test hardware to perform the integrity tests in a time-parallelized manner.

### Background

It is common to deliver a software code package of a software engineering project by using practices like Continuous Integration (CI) and Continuous Delivery (CD). For example, when a new piece of code is written, a validation process of the entire software (SW) code package may be triggered, thereby giving feedback to the author about how the new code impacts the current systems. During the development of a SW code project, there might be new features or enhancements every week or even every day. As far as CI and CD are concerned, once there is a new SW code item, a build is triggered. This may be done to create an archive file or a deployable or installable artifact such as an ISO image. The build is followed by integrity tests which will validate that code. This enables debugging of the code and early detection of errors. Details of CI are described in Stahl, Daniel, and Jan Bosch. "Modeling continuous integration practice differences in industry SW development." Journal of Systems and SW 87 (2014): 48-59.

A common tool to facilitate CI and CD is Jenkins. See Smart, John Ferguson. Jenkins: the definitive guide. " O'Reilly Media, Inc.", 2011. There are other tools that facilitate CI and CD beyond Jenkins. Such tools and Jenkins in particular provide a CI system making it easier for developers to integrate changes to the project and making it easier for users to obtain a fresh build. The automated, continuous build and automated tests increase the productivity.

However, reference implementations of CI and CD face certain restrictions and drawbacks. For example, common tools for CI and CD sometimes lack advanced logic functionality and simply execute pre-defined configuration files which explicitly instruct to take actions according to some conditions.

It has been observed that such an implementation of CI and CD can require significant computational resources, in particular on test hardware. Provisioning the computational resources can be error-prone, require significant maintenance, use significant energy, and can be costly. This sometimes limits the frequency with which integrity tests are executed.

WO 2013/078269 A1 discloses a system for building an validating an application without any scripting required by a system user.

### Summary

A need exists for advanced techniques facilitating integrity tests of a plurality of SW code items. In particular, a need exists for techniques which overcome or mitigate at least some of the above-identified drawbacks and restrictions and to improve a tracking and prediction of resource use for the allocation of resources while being able to detect outliers in the allocation and prediction.

This need is met by the features of the independent claims. The dependent claims define embodiments.

Accordingly, a method is provided a mentioned in claim 1. It comprises, for each one of a plurality of software code items, loading respective control data. The control data is indicative of the time-dependent allocation of computational resources when performing an integrity test of the respective software code item. The method further comprises triggering a test hardware to perform the integrity tests of the plurality of software code items in a time-parallelized manner based on the control data. The test hardware comprises the computational resources.

Accordingly a device is provided as mentioned in claim 9. It comprises a memory. The memory is configured to store control instructions. The device further comprises at least one processor. The at least one processor is configured to read the control instructions from the memory and to perform, based on the control instructions, the following steps: for each one of a plurality of software code items, loading respective control data which is indicative of a time-dependent allocation of computational resources when performing an integrity test of the respective software code item; and, based on the control data, triggering a test hardware comprising the computational resources to perform the integrity tests of the plurality of software code items in a time-parallelized manner.

It is to be understood that the features mentioned above and those yet to be explained below may be used not only in the respective combinations indicated, but also in other combinations or in isolation without departing from the scope of the invention.

### Brief Description of the Drawings

FIG. 1 schematically illustrates integration and deployment of a SW code package according to various embodiments.
FIG. 2 schematically illustrates a system including a server and computers, wherein the system is for integrating the SW code package based on integrity tests of SW code items of the SW code package according to various embodiments.
FIG. 3 schematically illustrates the SW code package including a plurality of SW code items according to various embodiments.
FIG. 4 schematically illustrates control data indicative of a time-dependent allocation of computational resources when performing the integrity tests of the SW code items according to a comparative example.
FIG. 5 schematically illustrates a timing schedule for performing the integrity tests of the plurality of SW code items in a time-parallelized manner according to various embodiments.
FIG. 6 schematically illustrates a timing schedule for performing the integrity tests of the plurality of SW code items in a time-parallelized manner according to various embodiments.
FIG. 7 schematically illustrates a timing schedule for performing the integrity tests of the plurality of SW code items in a time-parallelized manner according to various embodiments.
FIG. 8 is a flowchart of a method according to various embodiments.
FIG. 9 is a flowchart of a method according to various embodiments.
FIG. 10 is a flowchart of a method according to various embodiments.
FIG. 11 is a flowchart of a method according to various embodiments.
FIG. 12 is a flowchart of a method according to various embodiments.
FIG. 13 schematically illustrates a server according to various embodiments.
FIG. 14 is a flowchart of a method according to various embodiments.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, SW, or a combination thereof.

Hereinafter, techniques are described which enable to perform integrity tests of a plurality of SW code items. An integrity test may enable to detect errors in the respective SW code items. An integrity test may include one or more of the following: a unit test; a regression test; an integration test; etc.. The integrity test may enable to identify resource allocation when executing SW code items. The integrity tests may allow to identify bugs in the SW code items. The techniques enable to perform integrity tests in the time-parallelized manner. An integrity test may include executing a compiled binary and enabling debug functionality when executing the binary. By performing the integrity tests in the time-parallelized manner, it becomes possible to reduce the time required for performing the integrity tests. Thereby, idle times in the test hardware can be reduced. This reduces the overall requirements for hardware. A more efficient use of the available computational resources becomes possible.

For example, in some reference implementations the test hardware is grouped into Systems Under Test (SUT) which are used as a whole when testing a given test item. A SUT is occupied by a single integrity test, irrespective of the workload imposed by the this integrity test. When all the SUTs are busy testing, the rest of integrity tests are queued. However, it has been observed that most of the integrity tests according to reference implementations do not use all the resources of the SUT. By performing the integrity tests in the time-parallelized manner, a better use of the available computational resources is possible.

According to some examples, dependencies associated with the integrity tests of different code items are considered when performing the integrity tests in the time-parallelized manner. Such smart scheduling avoids collisions between integrity tests performed in parallel.

It may be possible to add additional granularity to the integrity tests. This may be done by dividing a SW code package into a plurality of SW code items. By such a division of the SW code package into the smaller SW code items, it is possible to gain additional flexibility in the parallelization of the integrity tests. For example, when dividing the SW code package into the plurality of SW code items, this may be done based on dependencies associated with the integrity tests of the SW code items: thereby, dependency management may avoid collisions.

According to further examples, it is possible to employ machine learning to obtain an accurate estimation of the allocation of computational resources associated with the integrity tests of the plurality of SW code items. For example, control data indicative of the allocation of computational resources may be determined based on a priori knowledge which may be derived from previous iterations of the integrity tests.

The various techniques described herein may be employed in the CI and/or CD framework. For example, it may be possible to obtain the SW code package comprising a plurality of SW code items for which integrity tests are performed from CI.

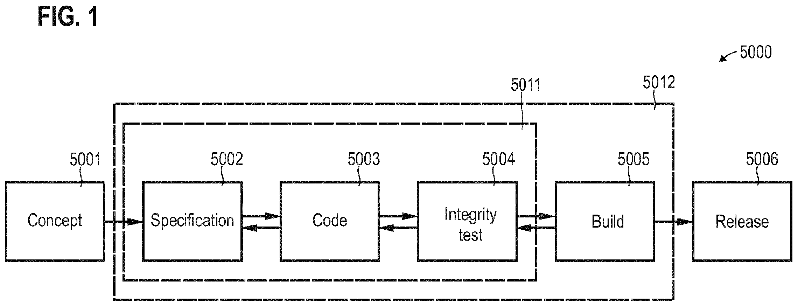

FIG. 1 illustrates aspects with respect to CI 5011 and CD 5012. FIG. 1 illustrates aspects with respect to development 5000 of a SW engineering project.

In the beginning, a concept 5001 of the SW engineering project is determined. Here, various specifications for the SW engineering project can be outlined. This may be done prior to implementing actual code on a computer.

Then, the specifications 5002 for particular SW code items of the SW engineering project are determined. Then, the SW code items are implemented on a computer, block 5003.

Integrity tests of the SW code items can be performed with small increments, block 5004. I.e., modifications of one or more of the SW code items can result in performing integrity tests as part of the CI 5011. For example, as part of the integrity tests, a SW code package can be compiled using the latest version of the available SW code items. The SW code items can then be deployed on test hardware. This may be followed by executing the builds. From this, bugs may be identified. This may include system testing, integration testing, and/or performance testing, etc.. The build at 5005 may yield a SW code package including the SW code items.

Feedback of the integrity test of block 5004 can be used to refine the coding at 5003 and/or the specifications at 5002.

If the integrity testing at 5004 yields positive results, it is possible to compile a build of the SW code package, block 5005, which can then be released, block 5006. By means of CD 5012, it is possible to provide releases of the SW code package with small increments. For example, releases 5006 may be provided on increments on the timescale of days or weeks.

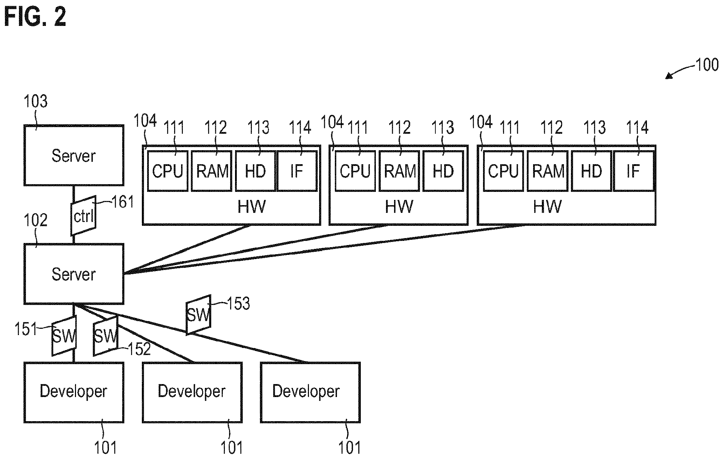

FIG. 2 illustrates aspects with respect to a system 100 that facilitates production of a SW code package. In FIG. 2, computers 101 are used by developers to develop and provide SW code items 151 - 153. The SW code items 151 - 153 are provided to a server 102. The server 102 may be in charge of CI 5011 and/or CD 5012. For example, the server 102 may compile the code according to the SW code items 151 - 153 , e.g., to obtain an image of the overall SW code package. For example, the server 102 may deploy the SW code items 151 - 153 on test hardware 104 in order to perform integrity tests. For example, the server 102 may trigger performing the integrity tests on the test hardware 104 according to a timing schedule.

Sometimes, each test hardware 104 is referred to as SUT. Each test hardware 104 offers computational resources 111 - 114. For example, the test hardware 104 may offer computational resources such as processing power 111, e.g., by implementing one or more central processing units and/or graphics processing units. Further, the test hardware 104 may offer computational resources such as memory 112, e.g., by implementing volatile and/or non-volatile cache such as L1 or L2 cache, Read Access Memory (RAM), etc. The test hardware 104 may also offer computational resources such as non-volatile storage 113, e.g., by implementing hard disk drives (HDD). For example, the test hardware 104 may also offer computational resources such as networking capabilities 114, e.g., by implementing interfaces etc.

It may be possible that the integrity tests of SW code items of a SW code package are all executed on a given instance of the test hardware 104. In other examples, the integrity tests of SW code items of the SW code package can also be distributed across different instances of the test hardware 104.

According to some examples, different instances of the test hardware 104 may provide a different amount of computational resources 111 - 114. For example, the processing power 111 may be dimensioned smaller or larger for certain instances of the test hardware 104. Likewise, the memory 112 and/or the non-volatile storage 113 may be dimensioned smaller or larger for certain instances of the test hardware 104. Further, it may be possible that different networking capabilities 114 are more powerful restricted for certain instances of the test hardware 104. By using instances of the test hardware 100 and for which offer different amount of computational resources 111 - 114, additional flexibility in the provisioning and/or maintenance of the test hardware 104 can be provisioned. For example, according to reference implementations of CI, typically, different test hardware 104 is required to offer the same computational resources. For example, according to reference implementations of CI, different instances of the test hardware 104 will have the same amount of bare-metal servers and all the hardware will have the same characteristics in terms on CPU, memory, storage, network capacity, etc. If an upgrade is desired, according to the reference implementations, such an upgrade is required to be performed on all instances of the test hardware 104.

According to examples, control data 161 is used by a server 103 to determine a timing schedule for the integrity tests. The timing schedule is used to perform the integrity tests in a time-parallelized manner. The server 103 implements logic which enables, based on the control data, to optimize the timing schedule with respect to certain figures of merit - such as usage of computational resources, etc. - and in view of certain constraints - such as dependencies and a maximum load of the test hardware 104. The server 103 can the provide the timing schedule to the server 102 to trigger the performing of the integrity tests in accordance with the timing schedule.

In detail, the control data 161 is indicative of a time-dependent allocation of computational resources 111 - 114 when performing the integrity tests of the SW code items 151 - 153 on the test hardware. It is possible to trigger the test hardware 104 to perform the integrity tests of the plurality of SW code items 151 - 153 in the time-parallelized manner based on the control data 161. In otherwords, it is possible to use smart scheduling to parallelize the integrity testing based on knowledge of the resource consumption of the integrity tests to thereby parallelize the integrity tests. This enables efficient usage of the computational resources 111 - 114.

According to some examples, the control data 161 can also be indicative of the computational resources 111 - 114 provided by the test hardware 104. Thereby, a comparison can be made between the time-dependent allocation of the computational resources when performing the integrity test of a respective SW code item 151 - 153 and the maximum load of the computational resources 111 - 114 provided by the test hardware 104, e.g., by a particular instance of the test hardware 104. Thereby, it may be possible to account for differences in the amount of computational resources 111 - 114 provided by the various instances of the test hardware 104.

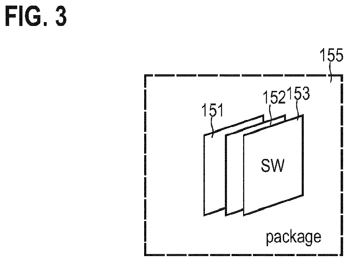

While in the example of FIG. 3 the logic of implementing the time-parallelized timing schedule resides in the server 103, it other examples it may also reside in the server 102.

FIG. 3 illustrates aspects with respect to a SW code package 155. As illustrated in FIG. 3, the SW code package 155 is built by the plurality of SW code items 151 - 153. For example, the SW code package 155 may be obtained from a CI process (cf. FIG. 1).The overall SW code package 155 may define in executable binary which provides the SW program, e.g., as defined according to the concept 5001 and/or the specification 5002.

According to some examples, the granularity of the code items 151 - 153 may be defined by different developers involved in the production of the SW code package 155. According to further examples, it is also possible to increase or reduce the granularity of the code items 151 - 153 when performing the integrity tests: as such, it may be possible to merge or split SW code items 151 - 153 before assigning the respective integrity tests to the test hardware 104.

For example, the SW code items 151-153 may be obtained by dividing the SW code package 155 appropriately. Dividing the SW code package into smaller SW code items may allow a simpler scheduling of the associated integrity tests, faster dependency clearance and ease the parallelization of integrity tests, thus increasing the usage efficiency of resources. This explained by means of the following example.

It would also be possible to obtain one or more integrity tests per SW code item 151-153 in another manner. For example, a given SW code item 151-153 may be associated with a plurality of integrity tests, e.g., 2 - 100 or 10- 50 integrity tests, etc.. The granularity with which the integrity tests are defined per SW code item 151-153 can vary in different examples. Generally, it can be desirable to slice a high-level integrity tests into a larger number of integrity tests: this may help to implement time-parallelized integrity testing, because the larger number of integrity tests can be flexible arranged. As such, according to the various examples described herein, it can be possible to slice a given predefined integrity tests to obtain a plurality integrity tests which can then be performed on the test hardware.

The complexity of the integrity tests of the SW code items 151-153 can vary. There may be integrity tests which test a specific functionality whereas other integrity tests may require a particular environment to be able to run the test. For example, if a Virtual Network Function (VNF) is to be tested, first, the whole cloud environment and perhaps a SW Defined Network (SDN) controller may be deployed and configured so that the VNF test can start. For example, the SW code package "VNF" may be divided into the following SW code items: (1) Deployment of OS and basic physical connectivity; (2) Deployment of cloud resources; (3) Deployment of SDN and virtual connectivity; (4) Deployment of VNF; (5) Different VNF tests such as (a) Ping; (b) IP request; (c) load test, etc.

It might be possible that integrity tests (2) and (4) do not consume much resources of the SUT and thus another integrity test could be run in parallel. Besides, it could be that a part of integrity test (3) fails and that would mean that several integrity tests in step (5) could not be run. However, integrity test (4) and some integrity tests of (5) could still be run, e.g. IP request if tunnel set up failed in integrity test (3). In this case, if the integrity tests are available with a sufficient granularity into different test items, we integrity tests (5a) and (5b) can be executed.

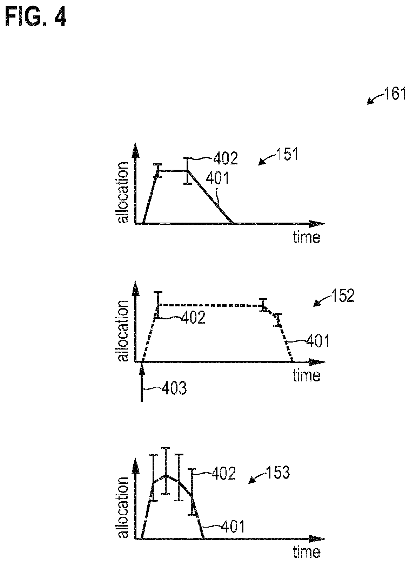

FIG. 4 illustrates aspects with respect to the control data 161. FIG. 4 illustrates the time-dependent allocation 401 of the computational resources 111 - 114 when performing an integrity test of the respective SW code item 151 - 153. As is apparent from FIG. 4, generally, the integrity tests of different SW code items 151 - 153 are associated with different time-dependent allocations 401 of the computational resources 111 - 114. Different integrity tests may require a different time duration for executing.

In the scenario of FIG. 4, the control data 161 is further indicative of the variances 402 of the allocation 401 of the computational resources 111 - 114 when performing the integrity tests of the SW code items 151 - 153. The variances 402 correspond to an uncertainty with which the actual allocation can be predicted. For example, different instances of the integrity test may show a slightly different behavior with respect to the allocation 401. This may be due to changes to the code of the SW code items between two integrity tests. Such a behavior may be treated in terms of the variances 402.

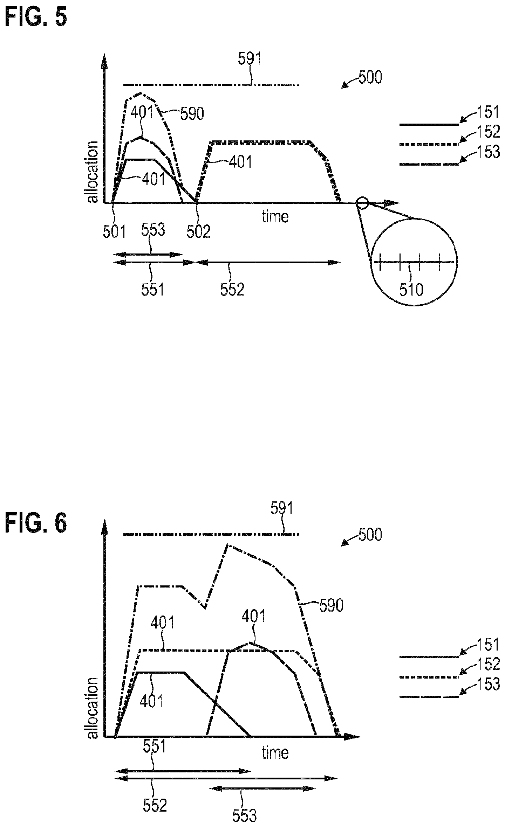

FIG. 4 further illustrates aspects with respect to dependencies 403. In the example of FIG. 5, the control data 161 is further indicative of dependencies 403 between the integrity tests of the plurality of SW code items 151 - 153. This is optional. In the example of FIG. 4, the integrity test of the SW code item 152 depends on the integrity test of the SW code item 151 (this is schematically illustrated in FIG. 4 by the vertical arrow 403 arranged at the beginning of the integrity test of the SW code item 152). This dependency 403 can require performing the integrity test of the SW code item 152 only once the integrity test of the SW code item 151 has completed. For example, violation of such a dependency 403 may result in unmeaningful results of the integrity test of the SW code item 152, if any result is obtainable at all.

In the various examples described herein, different types and kinds of dependencies are conceivable. For example, the dependencies 403 may be associated with the integrity test of a given SW code item 151-153 being dependent on the integrity test of a further SW code item by receiving input from the integrity test of the further SW code item. Hence, the integrity test of the given SW code item 151-153 may not be able to commence unless the input from the integrity test of the further SW code item has been received. Alternatively or additionally, the dependencies 403 may be associated with conflicts in allocation of the computational resources 111 - 114. For example, the integrity test of a given SW code item may be associated with the performance test; likewise, the integrity test of a further SW code item may also be associated with a performance test. Then, parallelization of the integrity tests of the given SW code item and further SW code item may result in unmeaningful results, because the performance tests can show crosscorrelation if executed on the same test hardware 104. For example, the integrity test of a given SW code item may only be required if a positive result is received from the integrity test of a further SW code item. Hence, if a negative result is obtained by performing the integrity test of the further SW code item, it may not be required to perform the integrity test of the given SW code item; rather, the integrity testing of the overall SW code package can be aborted and a negative result may be output. For example, the integrity test of a further SW code item may not be allowed to run "on top" of the integrity test of a given SW code item. This may refer to not destroying the results of the integrity test of the given SW code item when it has finished. This may also result in preventing performing the integrity tests of the given SW code item and the further SW code item in parallel. As can be seen, various kinds and types of dependencies are conceivable. Such kinds and types of dependencies may be covered by the dependency 403 as included in the control data 161.

According to some examples, it may be possible to divide the SW code package 155 (cf. FIG. 3) into the plurality of SW code items 151-153 based on the dependencies 403. For example, the SW code package 155 may be divided such that a minimum of dependencies 403 is obtained. This simplifies dependency management. In other examples, the SW code package 155 may be divided such that a maximum number of SW code items 151-153 is obtained with simple dependencies 403. For example, sub-division of a particular SW code item 151-153 into smaller SW code items 151-153 may be prevented if the correlation between the even smaller SW code items 151-153 cannot be expressed as a simple logic dependency 403.

Generally, different techniques of determining the control data 161 may be employed. For example, the control data 161 may be determined based on a priori knowledge. Such a priori knowledge, in one example, may be used to approximate the control data 161 by analyzing the code of the SW code items 151-153. In other examples, the a priori knowledge may be determined empirically. For example, the control data may be determined by monitoring allocation of the computational resources 111-114 while performing the integrity test. The control data may then be iteratively adjusted for each iteration of the integrity test according to CI. For example, the monitored allocation of computation resources may be compared with the computation resources indicated by the control data which may, in turn, be adjusted based on said comparing. This allows accurate tracking of the required computational resources. In particular, changes to the SW code items 151-153 which result in changes in the required computational resources can be captured.

Such adjusting may employ machine-learning techniques. These techniques may facilitate a high degree of automation. This reduces complexity.

It may be desirable to have a clear understanding of the resource allocation of each integrity test in order to accurately decide if it can be time-parallelized. For this, the resource consumption may be monitored every time the test is run. For example, it may be possible to provide the time-dependent allocation of computational resources to the server 103. The time that it takes to run the integrity test may also be monitored and reported.

For example, said adjusting may be based on a comparison of the variances indicated by the control data and the monitored allocation. Often, the integrity tests may be performed multiple times to account for changes being incorporated in the code. When the SW engineering project has a lot of contributors, the integrity tests may run daily. Every time the integrity test is run, it is possible to gather information about the allocation of computational resources. It is then possible to save different results obtained from such monitoring so that after multiple tests the variance being a trust factor can be specified for each SW code item. For example, if after 100 integrity tests the memory consumption was always around 2 GB, the trust factor of that measurement will be quite high. A small variance is obtained. That means that if the test #101 results in a 5 GB consumption, the system will not take that result as relevant and will decide that something wrong might have happened.

It is possible that the control data 161 is iteratively adjusted. For example, when new code is added to a SW code item, for example a new API, all the previous learnings on the allocation of computation resources are not required to be removed from the control data 161. Rather, modifying the control data 161 can be based on changes detected in the SW code items 151-153. For example, e.g., prior to performing the integrity test, the variance 402 may increase. This may allow for provision of sufficient safety margins. Also, the increased variance can result in new results being considered as relevant and compared with the already measured previous results.

Failing integrity tests may also be monitored and used for modifying the control data 161.

When a completely new SW code item is added, in lack of control data 161, time-parallelization may not be possible at the beginning until the control data 161 is determined.

FIG. 5 illustrates aspects with respect to parallelization of the integrity tests of the SW code items 151 - 153. FIG. 5 illustrates aspects with respect to a timing schedule 500 for the performing of the integrity tests of the SW code items 151 - 153. The timing schedule 500 may define the time arrangement / timing of the integrity tests of the SW code items 151 - 153. As such, the timing schedule 500 may define a work queue with which the integrity tests of the SW code items 151 - 153 are performed. For example, the timing schedule 500 may be indicative of a start time of each integrity test. For example, the timing schedule 500 may be indicative of an end time of each integrity test. For sake of simplicity, in FIG. 5, the time intervals 551 - 553 during which the integrity tests of the SW code items 151 - 153 are respectively performed are illustrated. These time intervals 551 - 553 may be expressed in the timing schedule 500 in various manners.

In the example of FIG. 5, the timing schedule 500 is determined based on the control data 161 according to the example of FIG. 4. In detail, the timing schedule 500 is determined to satisfy a relationship between a maximum load 591 of the computational resources 111-114 of the test hardware 104 and the allocation 401 of the computational resources 111-114 indicated by the control data 161. If no control data is available - e.g., because a priori knowledge on the integrity tests is not available -, the integrity tests may be performed in a conventional time-serialized manner.

For example, the timing schedule 500 is determined such that the integral allocation of computational resources 590 (dashed-dotted line in FIG. 5) - obtained by adding the allocation 401 of computational resources observed in a certain time increment 510 according to the control data 161 in a certain parallelization scenario of the plurality of SW code items 151 - 153 - remains below a threshold defined by the maximum load 591 (dashed-dotted-dotted line in FIG. 5). The respective relationship between the integral allocation 590 of computational resource 590 and the maximum load 591 satisfies a safety margin; the safety margin may be dimensioned based on the variances 402. This may account for deviations in actual allocation from the predicted allocation 401.

In FIG. 5, the integrity tests are partially performed in a time-parallelized manner. For example, the integrity test of the SW code item 151 is performed during a time interval 551. The integrity test of the SW code item 152 is performed during a time interval 552. The integrity test of the SW code item 153 is performed during a time interval 553. From FIG. 5, it is apparent that the time intervals 551, 553 overlap in time domain. Hence, the integrity tests for the SW code items 151, 153 are performed in the time-parallelized manner. The integrity tests for the SW code items 151, 153 are performed in a time-serialized manner with respect to the integrity test for the SW code item 152.

Due to the maximum load 591, it is not possible to perform the integrity tests of all of the SW code items 151 - 153 in the time-parallelized manner. This is due to the limited amount of computational resources 111 - 114 offered by the test hardware 104. However, based on the control data 161, it is possible to predict an optimized time arrangement of the integrity tests which uses the available computational resources in an efficient manner by reducing overhead and idle times.

FIG. 6 illustrates aspects with respect to parallelization of the integrity tests of the SW code items 151 - 153. Also in the example of FIG. 6, the time parallelization is determined based on the control data 161 according to the example of FIG. 4. However, in the example of FIG. 6, additional computational resources 111 - 114 are provided by the test hardware 104 if compared to the scenario of FIG. 5. Because of this, the maximum load 591 according to the example of FIG. 6 is higher than the maximum load according to the example of FIG. 5.

The additional computational resources 111 - 114 offer the potential of increasing a degree of time parallelization. As can be observed from a comparison of FIGs. 5 and 6, the time intervals 551 - 553 in the scenario FIG. 6 all overlap different to the scenario in FIG. 5. Nonetheless, the integral allocation 590 stays below the maximum load 591.

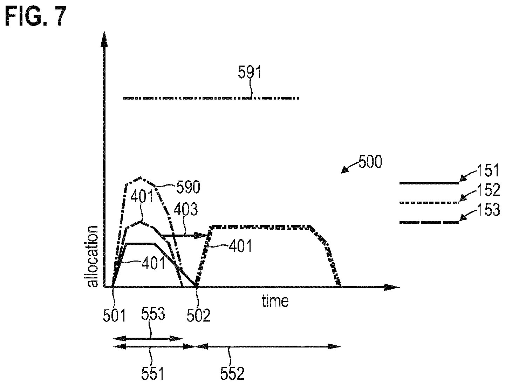

FIG. 7 illustrates aspects with respect to parallelization of integrity tests. Also in the example of FIG. 6, the time parallelization is determined based on the control data 161 according to the example of FIG. 4. FIG. 7 generally corresponds to FIG. 6. However, in the scenario of FIG. 7, additionally, the dependency 403 is considered when performing the integrity tests in a time-parallelized manner. While also in the scenario of FIG. 7 a fully time-parallelized timing schedule 500 of the integrity tests would be possible in view of the maximum load 591 (cf. FIG. 6), performing of the integrity test of the SW code item 152 is nonetheless postponed until the integrity test of the SW code item 151 has finished (illustrated by the arrow 403 in FIG. 7). Hence, the integrity tests of the SW code item 151 and the SW code item 152 are performed in a time-serialized manner due to the dependency 403.

FIGs. 5 - 7 illustrate various time arrangement of the integrity tests. Such time arrangements are examples and may vary from implementation to implementation. According to various examples, techniques are provided which enable to implement logic to optimize the time arrangement with respect to one or more target figures of merit, e.g., efficiency of allocation of the computational resources.

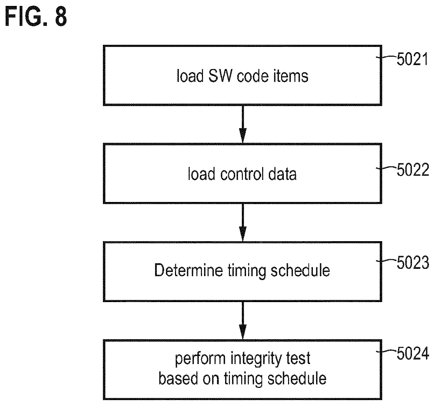

FIG. 8 is a flowchart of a method according to various examples. First, in block 5021, the SW code items are loaded for which the integrity test is to be executed. The SW code items can constitute a system under test. The system under test may be installed on a server and may be loaded into some working memory. For example, execution of block 5021 may be triggered according to the principles of CI. As such, a SW code packets 155 may be obtained from CI of the SW engineering project. For example, this may involve detecting changes of at least one of the SW code items 151 - 153 automatically. Then, performing the integrity tests can be automatically triggered in response to said detecting of the change.

Next, in block 5022, the control data 161 is loaded. The control data 161 is indicative of the time-dependent allocation 401 of computational resources 111 - 114 when performing the integrity test of the SW code items. As such, the control data 161 may predict the computational resources 111 - 114 required to perform the integrity tests. The control data 161 may be indicative of additional information relevant to the integrity tests. Such additional information may include the variances 402 and/or the dependencies 403

The control data 161 may be determined based on previously performed integrity tests of corresponding SW code items. For example, machine learning techniques may be used to determine the control data 161. The control data 161 may resemble a priori knowledge on the allocation 401 of the computational resources 111-114 when performing the integrity tests. For example, the variances 402 may be set depending on an amount of changes between the SW code item based on the integrity test of which the control data 161 has been determined and the current instance of the SW code item.

Next, in block 5023, the timing schedule 500 is determined. The timing schedule 500 is determined based on the control data 161. For example, the timing schedule 500 may be determined such that the maximum load 591 of the computational resources 111 - 114 of the test hardware 104 is not exceeded by the integral resource allocation 590 derived from the control data 161. This involves arranging some of the integrity tests in a time-serialized manner, while other integrity tests are performed in the time-parallelized manner. Further, when determining the timing schedule 500 in block 5023, it is possible to consider the variances 402 and/or the dependencies 503.

In one example of determining the timing schedule 500 in block 5023, it could be possible to select a seed SW code item from all available SW code items 151-153. Then, the duration of performing the integrity test of the seed SW code item may be determined from the control data 161. Then, it may be possible to identify for one or more further SW code items selected from all available SW code items 151-153 whether their respective duration for performing the integrity test is smaller than the duration of performing the integrity test of the seed SW code item: those one or more further SW code items 151-153 which have a duration of the associated integrity test which fits into the duration of the integrity test of the seed SW code item constitute candidate SW code items 151-153 which are, in principle, eligible for time-parallelized performing of the integrity tests with respect to the integrity test of the seed SW code item. For example, it may be possible to fill up headroom in available resources beyond the resources occupied by the integrity test of the seed SW code item 151-153 from those candidate SW code items 151-153. Such a technique may lead to the scenario illustrated in FIG. 5: here, the time interval 553 of the SW code item 153 is smaller than the time interval 551 of the seed SW code item 151 - while the time interval 552 of the SW code item 152 is larger than the time interval 551 of the seed SW code item 141. Thus, the SW code item 153 is a candidate SW code item for time-parallelized performing of the integrity test with the seed SW code item 151. The SW code item 152 is not a candidate SW code item. The integrity test of this SW code item 152 is then simply appended to the integrity test of the seed SW code item 152 (the SW code item 152 may itself act as a seed SW code item for still further SW code items). Such a linear approach starting with the seed SW code item may be comparably simple to implement.

A further example of determining the timing schedule 500 in block 5023 can relate to a more flexible approach. Here, a full-scale optimization may be implemented. Such a scenario is illustrated in FIG. 6. Here, the timing of the integrity tests of the various SW code items 151-153 is flexibly arranged, e.g., irrespective of an initial queue with which the SW code items 151-153 are pre-provisioned. Various optimization criteria can be taken into account, e.g., total time, average resource usage, etc.. Various constraints can be taken into account, e.g., a threshold 591, a minimum threshold, a number of parallelized integrity tests, etc..

Now referring again to FIG. 8: Once the timing schedule 5023 has been determined, the integrity tests are performed for the various SW code items 151 - 153 in accordance with the timing schedule.

For example, it is possible that during 5024 the actual allocation of the computational resources 111-114 is monitored. Then, based on changes between the actual allocation and the allocation 401 indicated by the control data 161 of block 5022, it is possible to refine the control data 161. This may be done by employing sliding window techniques and/or iteratively updating the control data 161. For example, variances 402 can be considered to weigh changes to the control data 161.

If the integrity tests for all SW code items 111-114 is successful in block 5024, it may be possible to release the SW code items 111-114 for compilation and deployment according to CD of the respective SW engineering project.

Generally, there are various options available for determining the timing schedule 500 in block 5023.

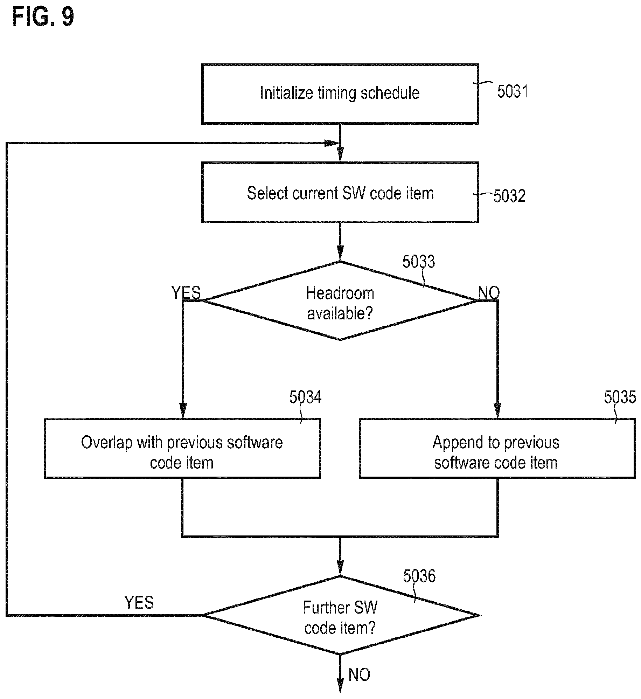

FIG. 9 is a flowchart of a method according to various examples. FIG. 9 illustrates aspects with respect to determining the timing schedule 5000. For example, blocks 5031 - 5036 may be executed as part of block 5023.

First, in block 5031, the timing schedule 500 is initialized. The timing schedule 500 may be initialized by setting the start time of the first one of the plurality of SW code items to 0. Hence, in other words, the timing schedule 500 may be initialized based on a given one of the plurality of SW code items 151 - 153.

Next, in block 5032, a next SW code item 151 - 153 is selected from the plurality of all SW code items 151 - 153. The selected SW code item 151 - 153 is the current SW code item for which a certain start time according to the timing schedule 500 is determined.

For this, in block 5033, it may be checked whether headroom is available for performing the integrity test of the current SW code item 151 - 153 in a time-parallelized manner with integrity test of any one of the SW code items 151 - 153 already defined with respect to the timing schedule 5031. For example, the check in block 5033 may involve comparing the integral resource allocation 590 with the maximum load 591. Here, the variances 402 can be considered to provision a safety margin.

If the check in block 5033 yields that headroom is not available, then block 5035 is executed. In block 5035, the integrity test of the current SW code item 151 - 153 is appended to the last integrity test currently present in the timing schedule 500. Hence, the integrity test of the current SW code item 151 - 153 is performed in the time-serialized manner with respect to the integrity tests of the further SW code items 151 - 153 already defined with respect to the timing schedule 500. This relates to performing a queued, time-serialized testing. In simple examples, the integrity test of the current SW code item 151 - 153 may be put back into a pre-defined serial queue of all integrity tests of the SW code items 151 - 153.

If the check in block of 5033 yields that headroom is available, then block 5034 is executed. In block 5034, the integrity test of the current SW code item 151 - 153 is arranged according to the identified headroom. This involves creating a time overlap between the time interval 551-553during which the integrity test of the current SW code item 151 - 153 is performed and the further time interval 551-553 of the integrity test of at least one further SW code item 151 - 153 performed in a time-parallelized manner.

Next, in block 5036 it is checked whether further SW code item 151 - 153 is required to be added to the timing schedule 500. If this is the case, then the blocks 5032 - 5035 are executed anew.

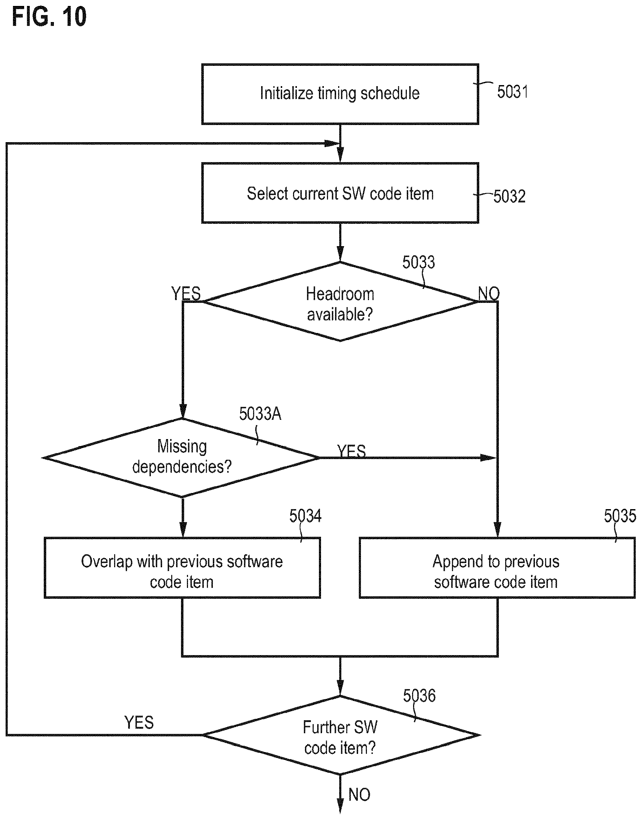

FIG. 10 is a flowchart of a method according to various examples. The method according to FIG. 10 generally corresponds to the method according to FIG. 9. The method according to FIG. 10 further includes block 5033A.

In block 5033A, a check is made, whether a time parallelized arrangement of the integrity check of the current SW code item 151-153 selected according to block 5032 with the integrity check of at least one further SW code item 151 - 153 would cause a violation of one or more dependencies 403. Only if dependencies 403 are not missed, the time parallelized arrangement is executed in block 5034. Otherwise, block 5035 is executed.

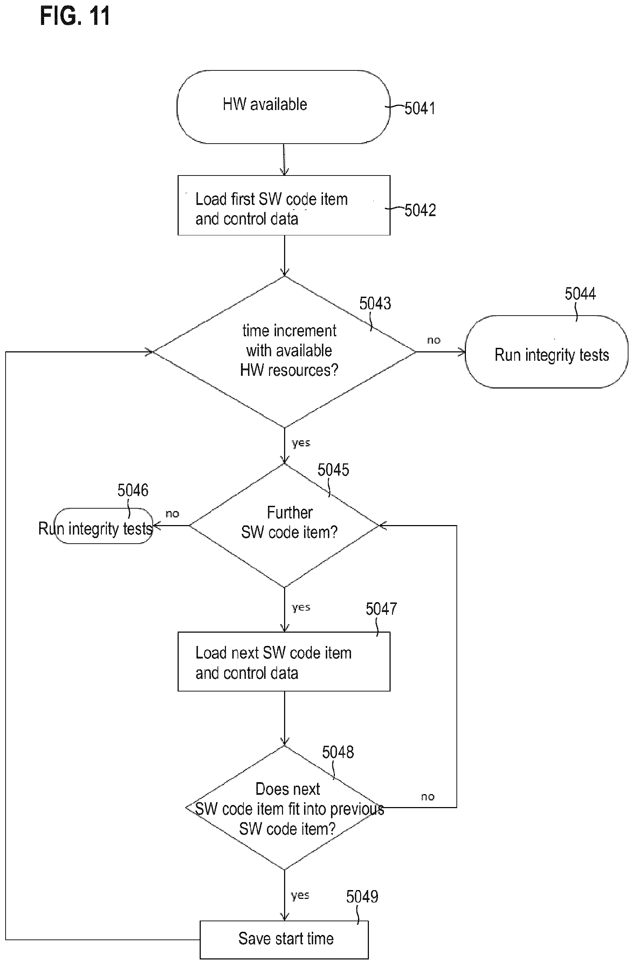

FIG. 11 is a flowchart of a method according to various examples. FIG. 11 illustrates aspects with respect to queuing integrity tests according to the timing schedule 500. FIG. 11 illustrates a scenario where available testing hardware 104 is used promptly for performing the integrity tests.

FIG. 11 illustrates a scenario where a check is made for a single computational resource 111-114, for sake of simplicity. However, it is possible to readily apply such techniques for a plurality of computational resources 111-114.

Block 5041 commences if test hardware 104 is available and/or if a change in a SW code item 161 is detected.

Then, in block 5042, a first SW code item is selected and loaded into the timing schedule 500. Corresponding control data 161 is loaded. The control data 161 is indicative of the resource allocation as a function of time. The time duration it takes to complete the integrity test is divided into time increments 510 of the defined length.

In block 5043 it is checked, based on the control data 161, if the resource allocation 401 offers headroom. For this, the allocation 401 may be combined with the maximum load 591 for different time increments 510. The maximum load 591 may be defined for the test hardware 104 which has been identified as being available in block 5041.

If in block 5043 it is judged that there are no time increments 510 with available headroom, then block 5044 is executed. In block 5044, the integrity test or integrity tests are performed. Thus, before scheduling of the integrity tests of the remaining SW code items 151-153 has finished, it is possible to already commence performing the integrity test of the first SW code item 151-153. This reduces the lead time.

If in block 5043 it is judged that they are one or more time increments with available headroom, then block 5045 is executed. In block 5045, it is checked whether there are further SW code items 151-153 for which the integrity test is to be performed. If there are no further SW code items 151-153 for which the integrity test is to be performed, then there is nothing to parallelize. Then, the method commences with block 5046. In block 5046, the integrity tests or integrity tests are performed.

If, in block 5045 it is judged that there is at least one further SW code item for which the integrity test is to be performed, then, in block 5047, a further SW code item 151-153 is selected.

Next, in block 5048, it is checked whether the integrity test of the now selected further SW code item 151-153 can be parallelized with the integrity test of the previous SW code item 151-153. To do that, it is possible to check if this current integrity test has a shorter duration than a group of subsequent time increments 510 of the time interval 551-553 of the previous SW code item 151-143. If this is not the case, it is not possible to parallelize this integrity test in block 5045 is executed anew. However, if the current integrity test has a shorter duration than a group of subsequent time increments, then it is checked whether the integral allocated computational resources do not exceed the maximum load 591. If the corresponding threshold is exceeded, it is not possible to parallelize this integrity test and block 5045 is executed anew. However, if the integral allocated computational resources 590 do not exceed the maximum load 591, it is checked whether dependencies between the two or more integrity tests to be parallelized allow them to be run in parallel. If this is not the case, it is not possible to parallelize does integrity test in block 5045 is executed anew. However, if parallelization is possible, then the respective start time 5049 or generally timing is saved in the timing schedule 500. Next, block 5043 is executed anew. Here, an adjusted integral resource allocation 591 can be taken into account for the next iteration.

A possible control data 161 that may be subject to an example implementation of such a method could look as follows:

**Table 1: Control data**

| | Time duration | Resource allocation |
|---|---|---|
| SW code item 151 | 6 time increments | 30 % in time increments 1 - 3 |
| | | 80 % in time increments 4 - 6 |
| SW code item 152 | 8 time increments | 20 % in time increments 1 - 3 |
| | | 50 % in time increments 4 - 8 |
| SW code item 153 | 2 time increments | 60 % in time increments 1 - 2 |

The integrity test of SW code item 152 cannot be performed in parallel with the integrity test of the SW code item 152, because it has a longer duration 552 then the duration 551 of the SW code item 151. However, it is possible to perform the integrity test of the SW code item 153 in parallel with the integrity test of the SW code item 151 during time increments 1 - 2.

Then the respective timing schedule 500 could look as follows:

**Table 2: Timing schedule**

| | Start time |
|---|---|
| SW code item 151 | Time increment 1 |
| SW code item 152 | Time increment 7 |
| SW code item 153 | Time increment 1 |

Once the integrity test has finished, it is possible to check whether there is a dependency with a further queued integrity test. Then, such a further queued integrity test can run on top of the finished integrity test. If there is a dependent further integrity test, then the environment can be kept in the corresponding integrity test can be prioritized. If not, the environment can be deleted.

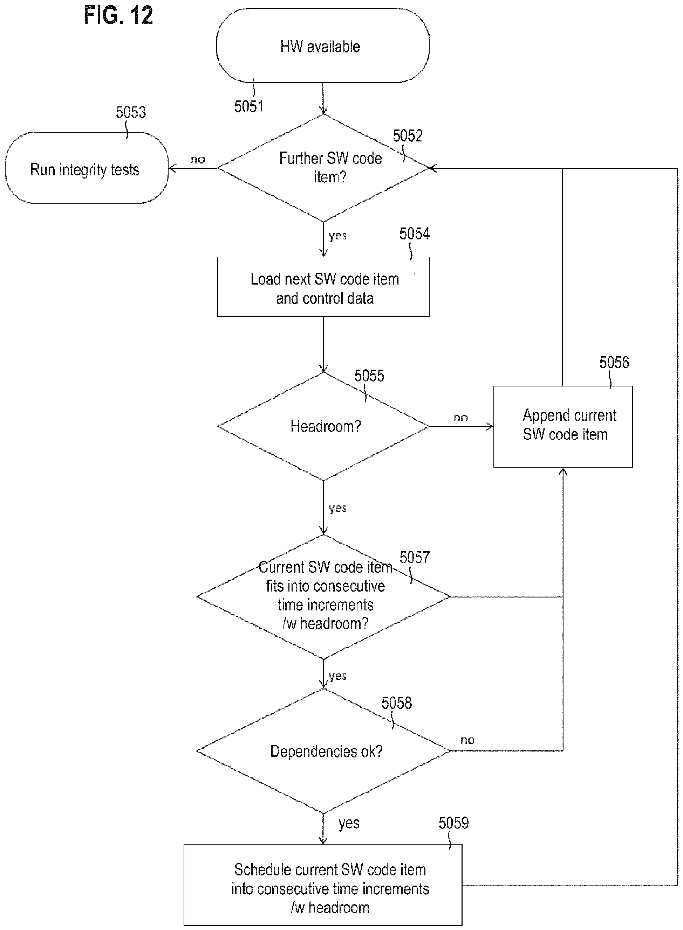

FIG. 12 is a flowchart of a method according to various examples. FIG. 12 illustrates aspects with respect to determining the timing schedule 500. The example of FIG. 12 generally corresponds to the example of FIG. 11. One difference between the example of FIG. 12 and the example of FIG. 11 is that according to the example of FIG. 12 the timing schedule 500 is fully determined before performing of the integrity tests is started. For sake of simplicity, in FIG. 12, again the check for a single computational resource 111 - 114 is illustrated; however, a larger number of computational resources 111 - 114 may be considered.

In the example of FIG. 12, time is discretized into time intervals 510 with a fixed duration. An example fixed duration would amount to 1 minute. According to the predicted allocation 401 of computational resources as indicated by the control data 161, integrity tests can be performed in a time-parallelized manner. Once the timing all integrity test has been determined, the integrity tests can be performed according to the respective timing schedule 500.

Block 5051 generally corresponds to block 5041.

In block 5052 it is checked whether there are (further) SW code items 151-153 queued for integrity tests. Once all integrity tests have been scheduled in the timing schedule 500, the timing schedule 500 is fully processed and integrity tests commence, block 5053.

If in block 5052 it is judged that there is at least one further SW code item 151 - 153 for which a timing has not been determined as part of the timing schedule 500, then the method commences with block 5054. Here, the next SW code item 151 - 153 and associated control data 161 is loaded.

In block 5055, it is again checked whether headroom is available. For this, it is determined whether it is possible to perform the current integrity test in parallel with at least one further integrity test according to the control data 161.

If headroom is not available, then, in block 5056, the integrity test of the current SW code item is appended at the end time of the last integrity test in the timing schedule 500. Otherwise, in block 5057 it is checked whether the current integrity test can be parallelized among the already scheduled integrity tests. In order to parallelize the current integrity test, it is typically required that there is a group of consecutive time increments in the timing schedule 500 which can accommodate the current integrity test completely without crossing the threshold imposed by the maximum load 591. Again, if the current integrity test cannot be scheduled in parallel, it is placed at the end of the timing schedule 500, block 5056.

If in block 5057 it is judged that the current integrity test can be scheduled in parallel, it is checked whether there is any dependency with a integrity test that is already scheduled in parallel or prior to the current integrity test. If there is a dependency, again, the current integrity test is placed at the end of the timing schedule 500, block 5056.

Otherwise, the current integrity test is scheduled into the identified consecutive time increments 510 which provide headroom, block 5059. Then, block 5052, it is checked again whether there are further SW code items to be scheduled.

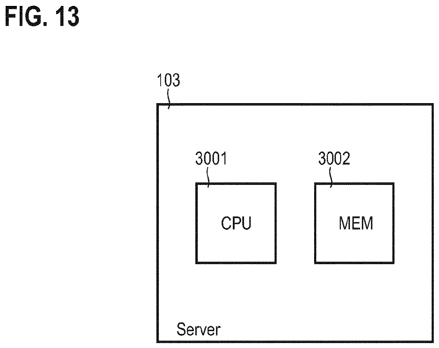

FIG. 13 schematically illustrates the servers 102, 103. The servers 102, 103 comprise a processor 3001 and him memory 3002, e.g., non-volatile memory 3002. The processor 3001 is configured to execute control instructions stored by the memory 3002. Executing the control instructions causes the processor 3001 to perform various techniques as described herein. Such techniques include triggering test hardware to perform one or more integrity test according to the timing schedule. Such techniques furthermore comprise determining the timing schedule. For example, the timing schedule can be determined based on control data which is indicative of a time-dependent allocation of computational resources of the test hardware.

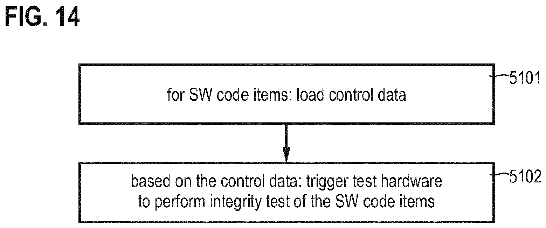

For example, executing the control instructions stored by the memory 3002 can cause the processor 3001 to perform a method according to FIG. 14.

FIG. 14 is a flowchart of a method according to various examples.

In block 5101, control data is loaded for one or more SW code items for which integrity tests are planned. The SW code items can be part of the SW code package. For example, execution of block 5101 can be triggered as part of techniques of CI and/or CD.

Next, in block 5102, test hardware is triggered to perform the integrity tests of the SW code items based on control data. The control data is indicative of a time-dependent allocation of computational resources of the integrity tests of the SW code items. Based on the control data, it is possible to predict whether time-parallel alignment of two or more integrity tests fulfills certain constraints that may be imposed, e.g., due to a maximum load that may be imposed on the test hardware and/or a variance of the allocation of computational resources of the integrity tests of the SW code items and/or dependencies between the integrity tests of the SW code items.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A method, comprising:
- for each one of a plurality of software code items (151-153): loading respective control data (161) which is indicative of a time-dependent allocation (401) of computational resources (111-114) when performing an integrity test of the respective software code item (151-153), wherein the control data is further indicative of variances of the allocation of the computational resources when performing the integrity tests of the plurality of software code items, the variance indicating an uncertainty with which the allocation can be predicted,
wherein a timing schedule is determined for performing the integrity tests, the timing schedule being indicative of a timing of each integrity test,
wherein said timing schedule is determined to satisfy a relationship between a predefined maximum load of the computational resources of the test hardware and the integral allocation of the computational resources indicated by the control data, leading some of the integrity tests to be performed in a time-serialized manner while other integrity tests to be performed in a parallelized manner, wherein said relationship is dimensioned based on said variances and
- based on the timing schedule: triggering a test hardware (104) comprising the computational resources (111-114) to perform the integrity tests of the plurality of software code items (151-153) in a time-parallelized manner or time-serialized manner (p 15/25-32),
- monitoring allocation of the computational resources (111-114) of the test hardware (104) while performing the integrity test,
- comparing the monitored allocation with the allocation (401) of computational resources (111-114) indicated by the control data (161), and
- modifying the control data (161) based on said comparing, wherein the variances are used to weigh changes when modifying the control data .

2. The method of claim 1,
wherein the control data (161) is further indicative of dependencies (403) between the integrity tests of the plurality of software code items (151-153).

3. The method of claim 2,
wherein the dependencies (403) are associated with the integrity test of a first software code item (151-153) being dependent on the integrity test of a second software code item (151-153) receiving input from the integrity test of the second software code item (151-153).

4. The method of claims 2 or 3, further comprising:
- loading a software code package (155), and
- dividing the software code package (155) into the plurality of software code items (151-153) based on the dependencies (403).

5. The method of claim 1, further comprising:
- detecting a change in the plurality of software code items (151-153) if compared to a previous integrity test,
wherein the control data (161) is modified based on the detected change.

6. The method of any one of the preceding claims,
wherein the computational resources (111-114) are selected from the group comprising: memory; storage; networking capabilities; and processing power of the test hardware (104).

7. The method of any one of the preceding claims, further comprising:
- selectively releasing the plurality of software code items (151-153) for compilation and deployment based on the integrity tests and according to Continuous Deployment of a software engineering project.

8. The method of any one of the preceding claims, further comprising:
- automatically detecting a change of at least one of the software code items (151-153),
wherein test hardware (104) is triggered to perform the integrity tests in response to said detecting of the change.

9. A device (102, 103), comprising:
- a memory (3002) configured to store control instructions,
- at least one processor (3001) configured to read the control instructions from the memory and to perform, based on the control instructions, the following steps:
- for each one of a plurality of software code items (151-153): loading respective control data (161) which is indicative of a time-dependent allocation (401) of computational resources (111-113) when performing an integrity test of the respective software code item (151-153), wherein the control data is further indicative of variances of the allocation of the computational resources when performing the integrity tests of the plurality of software code items, the variance indicating an uncertainty with which the allocation can be predicted,
wherein a timing schedule is determined for performing the integrity tests, the timing schedule being indicative of a timing of each integrity test,
wherein said timing schedule is determined to satisfy a relationship between a predefined maximum load of the computational resources of the test hardware and the integral allocation of the computational resources indicated by the control data, leading some of the integrity tests to be performed in a time-serialized manner while other integrity tests to be performed in a parallelized manner, wherein said relationship is dimensioned based on said variances and
- based on the timing schedule: triggering a test hardware (104) comprising the computational resources (111-113) to perform the integrity tests of the plurality of software code items (151-153) in a time-parallelized manner or time-serialized manner,
- monitor allocation of the computational resources (111-114) of the test hardware (104) while performing the integrity test,
- compare the monitored allocation with the allocation (401) of computational resources (111-114) indicated by the control data (161), and
- modify the control data (161) based on said comparing, wherein the variances are used to weigh changes when modifying the control data .

10. The device (102, 103) of claim 9,
wherein the at least one processor is configured to perform, based on the control instructions, the method of any one of claims 1 - 8.

## Patentansprüche

1. Verfahren, umfassend:
- für jedes einer Mehrzahl von Softwarecodeelementen (151-153): Laden von jeweiligen Steuerdaten (161), die eine zeitabhängige Zuweisung (401) von Rechenressourcen (111-114) anzeigen, wenn eine Integritätsprüfung des jeweiligen Softwarecodeelements (151-153) durchgeführt wird, wobei die Steuerdaten ferner Varianzen der Zuweisung der Rechenressourcen anzeigen, wenn die Integritätsprüfungen der Mehrzahl von Softwarecodeelementen durchgeführt werden, wobei die Varianz eine Unsicherheit anzeigt, mit der die Zuweisung vorhergesagt werden kann,
wobei ein Zeitplan zum Durchführen der Integritätsprüfungen bestimmt wird, wobei der Zeitplan eine Zeitvorgabe jeder Integritätsprüfung anzeigt,
wobei der Zeitplan bestimmt wird, um eine Beziehung zwischen einer vordefinierten Maximallast der Rechenressourcen der Prüfhardware und der durch die Steuerdaten angezeigten ganzheitlichen Zuweisung der Rechenressourcen zu erfüllen, was dazu führt, dass einige der Integritätsprüfungen in einer zeitserialisierten Weise durchzuführen sind, während andere Integritätsprüfungen in einer parallelisierten Weise durchzuführen sind, wobei die Beziehung basierend auf den Varianzen bemessen wird, und
- basierend auf dem Zeitplan: Auslösen einer Prüfhardware (104), welche die Rechenressourcen (111-114) umfasst, zum Durchführen der Integritätsprüfungen der Mehrzahl von Softwarecodeelementen (151-153) in einer zeitparallelisierten Weise oder einer zeitserialisierten Weise (p 15 / 25-32),
- Überwachen von Zuweisung der Rechenressourcen (111-114) der Prüfhardware (104) während des Durchführens der Integritätsprüfung,
- Vergleichen der überwachten Zuweisung mit der Zuweisung (401) von Rechenressourcen (111-114), die durch die Steuerdaten (161) angezeigt wird, und
- Modifizieren der Steuerdaten (161) basierend auf dem Vergleich, wobei die Varianzen zum Gewichten von Änderungen beim Modifizieren der Steuerdaten verwendet werden.

2. Verfahren nach Anspruch 1,
wobei die Steuerdaten (161) ferner Abhängigkeiten (403) zwischen den Integritätsprüfungen der Mehrzahl von Softwarecodeelementen (151-153) anzeigen.

3. Verfahren nach Anspruch 2,
wobei die Abhängigkeiten (403) mit der Integritätsprüfung eines ersten Softwarecodeelements (151-153) assoziiert sind, die von der Integritätsprüfung eines zweiten Softwarecodeelements (151-153) abhängt und Eingaben von der Integritätsprüfung des zweiten Softwarecodeelements (151-153) empfängt.

4. Verfahren nach Anspruch 2 oder 3, ferner umfassend:
- Laden eines Softwarecodepakets (155), und
- Teilen des Softwarecodepakets (155) in die Mehrzahl von Softwarecodeelementen (151-153) basierend auf den Abhängigkeiten (403).

5. Verfahren nach Anspruch 1, ferner umfassend:
- Erkennen einer Änderung der Mehrzahl von Softwarecodeelementen (151-153) bei Vergleich mit einer vorherigen Integritätsprüfung,
wobei die Steuerdaten (161) basierend auf der erkannten Änderung modifiziert werden.

6. Verfahren nach einem der vorhergehenden Ansprüche,
wobei die Rechenressourcen (111-114) ausgewählt werden aus der Gruppe, die umfasst: Arbeitsspeicher; Datenspeicher, Netzwerkfähigkeiten; und Verarbeitungsleistung der Prüfhardware (104).

7. Verfahren nach einem der vorhergehenden Ansprüche, ferner umfassend:
- selektives Freigeben der Mehrzahl von Softwarecodeelementen (151-153) zur Kompilierung und Bereitstellung basierend auf den Integritätsprüfungen und gemäß Continuous Deployment eines Software-Engineering-Projekts.

8. Verfahren nach einem der vorhergehenden Ansprüche, ferner umfassend:
- automatisches Erkennen einer Änderung mindestens eines der Softwarecodeelemente (151-153),
wobei die Prüfhardware (104) in Reaktion auf das Erkennen der Änderung zum Durchführen der Integritätsprüfungen ausgelöst wird.

9. Vorrichtung (102, 103), umfassend:
- einen Speicher (3002), der zum Speichern von Steuerungsanweisungen konfiguriert ist,
- mindestens einen Prozessor (3001), der zum Auslesen der Steuerungsanweisungen aus dem Speicher und zum Ausführen der folgenden Schritte basierend auf den Steuerungsanweisungen konfiguriert ist:
- für jedes einer Mehrzahl von Softwarecodeelementen (151-153): Laden von jeweiligen Steuerdaten (161), die eine zeitabhängige Zuweisung (401) von Rechenressourcen (111-113) anzeigen, wenn eine Integritätsprüfung des jeweiligen Softwarecodeelements (151-153) durchgeführt wird, wobei die Steuerdaten ferner Varianzen der Zuweisung der Rechenressourcen anzeigen, wenn die Integritätsprüfungen der Mehrzahl von Softwarecodeelementen durchgeführt werden, wobei die Varianz eine Unsicherheit anzeigt, mit der die Zuweisung vorhergesagt wird,
wobei ein Zeitplan zum Durchführen der Integritätsprüfungen bestimmt wird, wobei der Zeitplan eine Zeitvorgabe jeder Integritätsprüfung anzeigt,
wobei der Zeitplan bestimmt wird, um eine Beziehung zwischen einer vordefinierten Maximallast der Rechenressourcen der Prüfhardware und der durch die Steuerdaten angezeigten ganzheitlichen Zuweisung der Rechenressourcen zu erfüllen, was dazu führt, dass einige der Integritätsprüfungen in einer zeitserialisierten Weise durchzuführen sind, während andere Integritätsprüfungen in einer parallelisierten Weise durchzuführen sind, wobei die Beziehung basierend auf den Varianzen bemessen wird, und
- basierend auf dem Zeitplan: Auslösen einer Prüfhardware (104), welche die Rechenressourcen (111-113) umfasst, zum Durchführen der Integritätsprüfungen der Mehrzahl von Softwarecodeelementen (151-153) in einer zeitparallelisierten Weise oder einer zeitserialisierten Weise,
- Überwachen von Zuweisung der Rechenressourcen (111-114) der Prüfhardware (104) während des Durchführens der Integritätsprüfung,
- Vergleichen der überwachten Zuweisung mit der Zuweisung (401) von Rechenressourcen (111-114), die durch die Steuerdaten (161) angezeigt wird, und
- Modifizieren der Steuerdaten (161) basierend auf dem Vergleich, wobei die Varianzen zum Gewichten von Änderungen beim Modifizieren der Steuerdaten verwendet werden.

10. Vorrichtung (102, 103) nach Anspruch 9,
wobei der mindestens eine Prozessor zum Durchführen des Verfahrens nach einem der Ansprüche 1 bis 8 basierend auf den Steuerungsanweisungen konfiguriert ist.

## Revendications

1. Procédé, comprenant :
- pour chacun parmi une pluralité d'éléments de code logiciel (151-153) : le chargement de données de commande respectives (161) qui sont indicatives d'une allocation dépendant du temps (401) de ressources de calcul (111-114) lors de la réalisation d'un test d'intégrité de l'élément de code logiciel (151-153) respectif, dans lequel les données de commande sont en outre indicatives de variances de l'allocation des ressources de calcul lors de la réalisation des tests d'intégrité de la pluralité d'éléments de code logiciel, la variance indiquant une incertitude avec laquelle l'allocation peut être prédite,
dans lequel un planning de timing est déterminé pour réaliser les tests d'intégrité, le planning de timing étant indicatif d'un timing de chaque test d'intégrité,
dans lequel ledit planning de timing est déterminé pour satisfaire une relation entre une charge maximale prédéfinie des ressources de calcul du matériel de test et l'allocation intégrale des ressources de calcul indiquées par les données de commande, amenant certains des tests d'intégrité à être réalisés d'une manière en série dans le temps et d'autres tests d'intégrité à être réalisés d'une manière en parallèle, dans lequel ladite relation est dimensionnée sur la base desdites variances, et
- sur la base du planning de timing : le déclenchement d'un matériel de test (104) comprenant les ressources de calcul (111-114) pour réaliser les tests d'intégrité de la pluralité d'éléments de code logiciel (151-153) d'une manière en parallèle dans le temps ou d'une manière en série dans le temps (p 15 / 25-32),
- la surveillance d'une allocation des ressources de calcul (111-114) du matériel de test (104) pendant la réalisation du test d'intégrité,
- la comparaison de l'allocation surveillée à l'allocation (401) de ressources de calcul (111-114) indiquées par les données de commande (161), et
- la modification des données de commande (161) sur la base de ladite comparaison, dans lequel les variances sont utilisées pour pondérer des changements lors de la modification des données de commande.

2. Procédé selon la revendication 1,
dans lequel les données de commande (161) sont en outre indicatives de dépendances (403) entre les tests d'intégrité de la pluralité d'éléments de code logiciel (151-153).

3. Procédé selon la revendication 2,
dans lequel les dépendances (403) sont associées au test d'intégrité d'un premier élément de code logiciel (151-153) étant dépendant du test d'intégrité d'un deuxième élément de code logiciel (151-153) recevant une entrée du test d'intégrité du deuxième élément de code logiciel (151-153) .

4. Procédé selon la revendication 2 ou 3, comprenant en outre :
- le chargement d'un ensemble de code logiciel (155), et
- la division de l'ensemble de code logiciel (155) dans la pluralité d'éléments de code logiciel (151-153) sur la base des dépendances (403).

5. Procédé selon la revendication 1, comprenant en outre :
- la détection d'un changement de la pluralité d'éléments de code logiciel (151-153) en cas de comparaison à un test d'intégrité précédent,
dans lequel les données de commande (161) sont modifiées sur la base du changement détecté.

6. Procédé selon l'une quelconque des revendications précédentes,
dans lequel les ressources de calcul (111-114) sont sélectionnées dans le groupe se composant de : mémoire ; stockage ; capacités de réseautage ; et puissance de traitement du matériel de test (104).

7. Procédé selon l'une quelconque des revendications précédentes, comprenant en outre :
- la libération sélective de la pluralité d'éléments de code logiciel (151-153) pour une compilation et un déploiement sur la base des tests d'intégrité et en fonction d'un déploiement continu d'un projet d'ingénierie logicielle.

8. Procédé selon l'une quelconque des revendications précédentes, comprenant en outre :
- la détection automatique d'un changement d'au moins l'un parmi les éléments de code logiciel (151-153),
dans lequel un matériel de test (104) est déclenché pour réaliser les tests d'intégrité en réponse à ladite détection du changement.

9. Dispositif (102, 103), comprenant :
- une mémoire (3002) configurée pour stocker des instructions de commande,
- au moins un processeur (3001) configuré pour lire les instructions de commande depuis la mémoire et réaliser, sur la base des instructions de commande, les étapes suivantes :
- pour chacun parmi une pluralité d'éléments de code logiciel (151-153) : le chargement de données de commande respectives (161) qui sont indicatives d'une allocation dépendant du temps (401) de ressources de calcul (111-113) lors de la réalisation d'un test d'intégrité de l'élément de code logiciel (151-153) respectif, dans lequel les données de commande sont en outre indicatives de variances de l'allocation des ressources de calcul lors de la réalisation des tests d'intégrité de la pluralité d'éléments de code logiciel, la variance indiquant une incertitude avec laquelle l'allocation peut être prédite,
dans lequel un planning de timing est déterminé pour réaliser les tests d'intégrité, le planning de timing étant indicatif d'un timing de chaque test d'intégrité,
dans lequel ledit planning de timing est déterminé pour satisfaire une relation entre une charge maximale prédéfinie des ressources de calcul du matériel de test et l'allocation intégrale des ressources de calcul indiquées par les données de commande, amenant certains des tests d'intégrité à être réalisés d'une manière en série dans le temps et d'autres tests d'intégrité à être réalisés d'une manière en parallèle, dans lequel ladite relation est dimensionnée sur la base desdites variances, et
- sur la base du planning de timing : le déclenchement d'un matériel de test (104) comprenant les ressources de calcul (111-113) pour réaliser les tests d'intégrité de la pluralité d'éléments de code logiciel (151-153) d'une manière en parallèle dans le temps ou d'une manière en série dans le temps,
- la surveillance d'une allocation des ressources de calcul (111-114) du matériel de test (104) pendant la réalisation du test d'intégrité,
- la comparaison de l'allocation surveillée à l'allocation (401) de ressources de calcul (111-114) indiquées par les données de commande (161), et
- la modification des données de commande (161) sur la base de ladite comparaison, dans lequel les variances sont utilisées pour pondérer des changements lors de la modification des données de commande.

10. Dispositif (102, 103) selon la revendication 9,
dans lequel l'au moins un processeur est configuré pour réaliser, sur la base des instructions de commande, le procédé selon l'une quelconque des revendications 1 à 8.
